# EUROPÄISCHE PATENTSCHRIFT

(11) **EP 0 552 461 B1**
(45) Veröffentlichungstag und Bekanntmachung des Hinweises auf die Patenterteilung: **28.02.1996**
(21) Anmeldenummer: 92121145.4
(22) Anmeldetag: 11.12.1992
(51) Int. Cl.: B60T 8/42

(54) **Blockiergeschützte hydraulische Bremsanlage**
Anti-lock hydraulic brake system
Système de freinage anti-blocage hydraulique

(30) Priorität: 23.01.1992 DE 4201731
(43) Veröffentlichungstag der Anmeldung: 28.07.1993
(73) Patentinhaber: ITT Automotive Europe GmbH, D-60488 Frankfurt (DE)
(72) Erfinder: Beck, Erhard, W-6290 Weilburg (DE)
(74) Vertreter: Portwich, Peter

(56) Entgegenhaltungen:
- EP-A- 0 332 399
- EP-A- 0 417 443
- DE-A- 4 107 626
- GB-A- 2 242 717
- GB-A- 2 252 599

## Beschreibung

Die Erfindung bezieht sich auf eine blockiergeschützte hydraulische Bremsanlage gemäß dem Oberbegriff des Anspruchs 1.

Aus der GB 21 95 724 A ist eine Bremsanlage zur Bremsschlupfregelung bekannt, die eine Pumpe aufweist, die das aus der Radbremse abgelassene Druckmittel in den Bremskreis zurückfördert.

Die Steuerung der Druckmittelmenge, die von der Pumpe in den Bremskreis zurückgefördert wird, erfolgt mit Hilfe eines elektromagnetisch betätigbaren Ventils, das an der Saugseite der Pumpe angeordnet ist.

Wenn dieses Ventil geschlossen ist, kann die Pumpe kein Druckmittel ansaugen und damit auch kein Druckmittel in den Bremskreis fördern. Mit Öffnen des Ventils kann die Pumpe ihre Förderarbeit aufnehmen.

Eine blockiergeschützte hydraulische Bremsanlage mit einer im elektromagnetisch betätigbaren Auslaßventil angeordneten Drossel geht aus der EP-A-0 543 187 hervor. Das Auslaßventil ist zwischen dem zur Radbremse führenden Druckmittelanschluß des Hauptzylinders und der Pumpensaugseite angeschlossen. In der Druckmittelverbindung zwischen Hauptzylinder und Radbremse befindet sich ein elektromagnetisch betätigbares Einlaßventil, das während der schlupffreien Normalbremsphase geöffnet ist, während das Auslaßventil die Druckmittelverbindung zur Saugseite der Pumpe sperrt. In einer Bremsdruckregelphase, in der das Druckmittel der Radbremse in Richtung zur Saugseite der Pumpe abgelassen wird, befindet sich das Auslaßventil in seiner Drosselstellung. Das über die Drosselstellung in Richtung der Saugseite der Pumpe abgelassene Druckmittel wird in einem Druckmittelspeicher bei Bedarf aufgenommen und nach Sperren des Auslaßventils dem Radbremskreis wieder zugeführt. Durch die funktionelle Anordnung des Druckmittelspeichers zwischen der Saugseite der Pumpe und der schaltbaren Drossel im Einlaßventil ergibt sich kein kontinuierlicher Drosseleffekt im Hinblick auf das Saugverhalten der Pumpe. Vielmehr bestimmt die Drosselwirkung des Auslaßventils den Druckabbaugradient in der Radbremse. Eine an der Druckseite der Pumpe angeordnete Dämpfungseinrichtung zur Reduzierung der Druckpulsationen der Pumpe besteht im wesentlichen aus einer Dämpfungskammer mit nachgeschalteter Drossel, die die Wirksamkeit der Dämpfungskammer bestimmt. Etwaige Geräuschänderungen, die sich durch das Schalten des Einlaßventiles ergeben, sowie Druckänderungen die sich während der Bremsschlupfregelung durch die permanente Betätigung des Hauptzylinders einstellen, können zu Geräuschen mit unterschiedlicher Intensität führen.

Eine blockiergeschützte hydraulische Bremsanlage, die über ein Stromregelventil verfügt, das über eine der Druckseite der Pumpe nachgeschaltete Festblende eine möglichst geringe Druckpulsation in Richtung des Hauptzylinders bewirkt, geht aus der EP-A-0 332 399 hervor. Die in der Pumpendruckleitung angeordnete Festblende befindet sich vor dem hydraulischen Anschluß der Pumpe an die vom Hauptzylinder in Richtung der Radbremse führenden Bremsleitung, während das Stromregelventil in einem Leitungsabzweig zwischen der Festblende und der Pumpe angeordnet ist, der zwischen der Radbremse und dem Einlaßventil in der Bremsleitung und dem Auslaßventil der Radbremse sich anschließt. In Abhängigkeit von der Schaltstellung des Auslaßventils wird sodann das Stromregelventil wirkam, das bei geöffnetem Auslaßventil einen Teilstrom der Pumpenfördermenge in Richtung des der Saugseite der Pumpe vorgeschalteten Druckmittelspeichers abläßt, womit sich durch das Zusammenwirken der Festblende mit dem Stromregelventil eine mit einem Hochdruckspeicher vergleichbare Wirkung ergibt. Die Geräuschdämpfung ist damit ausschließlich auf einer konstante Förderleistung der Pumpe ausgerichtet.

Blockiergeschützte hydraulische Bremsanlagen, die eine Pumpe aufweisen und Ventile, mit denen der Bremsdruck gesteuert werden kann, weisen den Nachteil auf, daß ein Regelvorgang mit einer erheblichen Geräuschentwicklung verbunden ist, da durch Öffnen und Schließen der Ventile die bewegte Bremsflüssigkeit ruckartig abgebremst bzw. beschleunigt wird, wodurch Druckwellen in das System induziert werden.

Mit der Erfindung ist daher die Absicht verbunden, die Geräuschentwicklung zu reduzieren, wobei die notwendigen Maßnahmen einfach zu realisieren sein sollen.

Die Erfindung schlägt daher in Verbindung mit den Merkmalen des Oberbegriffs des Hauptanspruchs vor, mit Beginn einer Regelung in die Saugleitung der Pumpe ein Drosselelement einzuschalten. Damit wird die Förderleistung der Pumpe reduziert, wobei gleichzeitig in die Bremsleitung zwischen dem Hauptzylinder und der Einmündung der Druckleitung der Pumpe in die Bremsleitung, eine weitere Drossel eingeschaltet wird. Wenn die Pumpenförderleistung so weit gedrosselt wird, daß sie nicht mehr ausreicht den Volumenbedarf der Regelung zu decken, dann wird dem Hauptzylinder Druckmittel entnommen, das über die Drossel in die Bremsleitung fließt. Dadurch wird der Druck in dem Bremsleitungsstück, das mit der Pumpe verbunden ist, reduziert gegenüber dem Druck im Hauptzylinder. Die Druckreduzierung hat weiter zur Folge, daß das Druckgefälle am Einlaßventil verringert wird, wobei sich herausgestellt hat, daß mit dieser Maßnahme eine deutliche Verringerung der Schaltgeräusche des Einlaßventils verbunden ist.

In vorteilhafter Weise kann die erste und die weitere Drossel über ein Schaltelement betätigt werden, das einerseits dem Hauptzylinderdruck und andererseits den Radzylinderdruck ausgesetzt ist.

Der Niederdruckspeicher, der das Druckmittel, das aus der Radbremse abgelassen wird, aufnimmt, kann ebenfalls Einfluß nehmen auf das Schaltelement, und zwar in der Weise, daß bei gefülltem Niederdruckspeicher das Schaltelement anspricht und die Drosselung der Saugseite der Pumpe aufgehoben wird. Dadurch wird die Förderleistung der Pumpe erhöht und der Niederdruckspeicher rasch geleert.

In vorteilhafter Weise kann das Schaltelement als Einsatzstück im Pumpengehäuse koaxial zum Niederdruckspeicher angeordnet werden.

Eine Beschreibung der Erfindung erfolgt mit Hilfe von 2 Figuren.
- Figur 1:: schematische Darstellung der Schaltung,
- Figur 2:: Schnittdarstellung des Schaltelements und des Niederdruckspeichers.

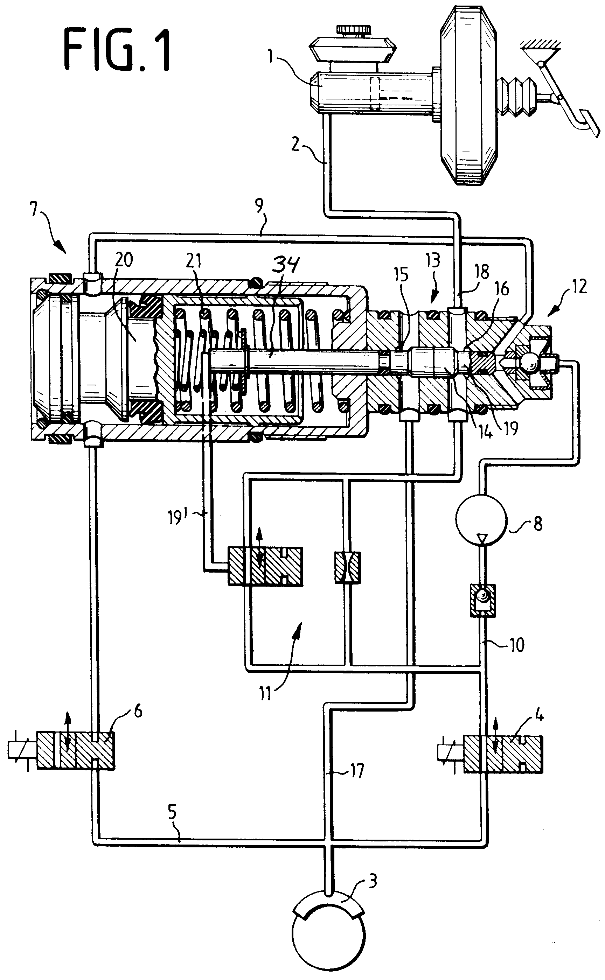

Zunächst sei auf Figur 1 Bezug genommen.

Dargestellt ist schematisch ein Hauptzylinder 1, der über eine Bremsleitung 2 mit einer Radbremse 3 verbunden ist.

Diese Darstellung wurde der Übersichtlichkeit wegen gewählt. Tatsächlich bestehen weitere nicht dargestellte Anschlüsse zu weiteren Radbremsen und zu weiteren Bremskreisen, wobei der Aufbau des gesamten Systems der Darstellung der Figur 1 entspricht.

In die Bremsleitung 2 eingefügt ist ein Einlaßventil 4, das elektromagnetisch betätigt wird und in seiner Grundstellung die Bremsleitung offenhält. In seiner Schaltstellung wird die Bremsleitung geschlossen, so daß Druckmittel aus der Radbremse abgelassen werden kann, ohne daß Druckmittel aus dem Hauptzylinder nachgeführt wird.

Die Radbremse 3 steht über eine Rücklaufleitung 5, in die ein Auslaßventil 6 eingefügt ist, mit einem Niederdruckspeicher 7 in Verbindung.

Das Auslaßventil 6 ist elektromagnetisch betätigt. In seiner Grundstellung hält es die Rücklaufleitung geschlossen. In seiner Schaltstellung wird die Rücklaufleitung freigegeben, so daß Druckmittel der Radbremse entnommen werden kann.

Eine Pumpe 8 ist über eine Saugleitung 9 mit dem Niederdruckspeicher 7 verbunden. Die Druckseite der Pumpe 8 führt über eine Druckleitung 10 in die Bremsleitung 3. Der Einmündungspunkt wird mit E bezeichnet.

In der Bremsleitung 2 zwischen dem Hauptzylinder 1 und dem Einmündungspunkt E ist ein erstes Drosselventil 11 angeordnet. Das Drosselventil besteht aus einem Schaltventil und einer parallel geschalteten Drossel, wobei Druckmittel normalerweise über das offene Schaltventil fließt. Wird dieses umgeschaltet, so fließt Druckmittel über die gedrosselte Bypassleitung.

Ein zweites Drosselventil 12 ist in die Saugleitung eingefügt. In seiner Grundstellung hält es die Saugleitung offen, so daß die Pumpe ungedrosselt ansaugen kann. In der Schaltstellung des Drosselventils 12 wird eine Drossel wirksam, die durch Drosselung der Saugleitung 9 die Förderleistung der Pumpe 8 einschränkt.

Das erste Drosselventil 11 und das zweite Drosselventil 12 sind an ein Schaltelement 13 angekoppelt. Dieses besteht aus einem Kolben 14, der zwei Räume 15, 16 voneinander trennt.

Der eine Raum 15 steht über eine Steuerleitung 17 mit der Radbremse 3 in Verbindung. Der andere Raum 16 steht über eine weitere Steuerleitung 18 mit dem Hauptzylinder 1 in Verbindung. An den Kolben 14 sind über Steuerstangen 19, 19' das erste Drosselventil 11 und das zweite Drosselventil 12 angekoppelt.

Bei einer nicht geregelten Bremsung entspricht der Druck im Hauptzylinder dem Druck in der Radbremse. Damit sind auch die Drücke in den beiden Räumen 15, 16 identisch. Der Kolben 14 verbleibt in seiner Grundposition. Damit befinden sich auch das erste und das zweite Drosselventil in ihren Grundstellungen, das heißt in der Position, in der die jeweiligen Leitungen ungedrosselt sind.

Während einer Regelung wird der Druck in der Radbremse 3 reduziert, so daß nun der Hauptzylinderdruck größer ist als der Radbremszylinderdruck. Dies führt zu einer entsprechenden Druckdifferenz am Kolben 14, wodurch dieser verschoben wird und das erste und das zweite Drosselventil 11, 12 umschaltet.

Das Schaltelement 13 wird aber nicht nur von der Differenz in den Drücken zwischen dem Hauptzylinder und der Radbremse beeinflußt. Der Kolben 20 des Niederdruckspeichers 7, an dem eine Speicherfeder 21 abgestützt ist, verfügt über einen Stößel 34, der an den Kolben 14 des Schaltelementes 13 anlegbar ist. Selbst in der verschobenen Stellung des Kolbens 14 besteht ein Abstand zwischen der Stange 34 und dem Kolben 14. Wird der Niederdruckspeicher 7 gefüllt, weil die Pumpe 8 wegen der gedrosselten Saugleitung nicht soviel Druckmittel aus dem Niederdruckspeicher 7 entnimmt, wie über das offene Auslaßventil 6 in den Niederdruckspeicher 7 abgelassen wird, dann gelangt die Stange 22 in Anlage an den Kolben 14 und bewirkt ein Rückschalten des ersten und des zweiten Drosselventils in ihre Grundpositionen.

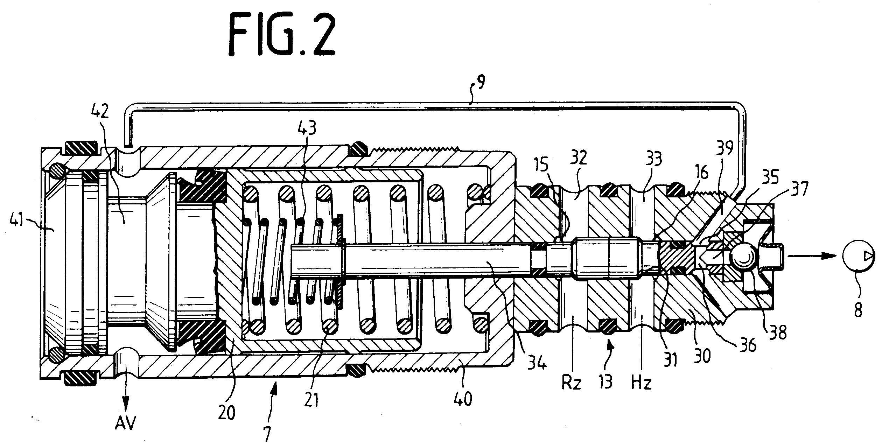

In der Figur 2 ist ein Ausführungsbeispiel für das Schaltelement 13, der zweiten Drossel 12 und dem Niederdruckspeicher 7 dargestellt.

Der Niederdruckspeicher 7 und das Schaltelement 13 sind so ausgebildet, daß sie auf eine Achse angeordnet in das Pumpengehäuse eingeschraubt werden können.

Das Gehäuse 30 für das Schaltelement 13 besteht aus einem kolbenartigen Teil mit einer Längsbohrung 31. Im mittleren Bereich ist diese Bohrung 31 erweitert. In der Bohrung 31 ist eine Stange 34 geführt, die im Bereich der erweiterten Bohrung verdickt ist. Auf diese Weise werden in der Bohrung 31 zwei Kammern 16, 15 ausgebildet, die über Querbohrungen 32, 33 mit nicht dargestellten Ringkammern verbunden sind, an die wiederum die Steuerleitungen 17, 18 anschließen. Die eine Querbohrung 33 führt somit zum Hauptzylinder (Hz), die andere Querbohrung zum Radzylinder (Rz).

Am Ende der Bohrung 31 ist ein Rückschlagventil 38 angeordnet, das als Saugventil für die Pumpe 8 dient. Das Ende der Stange 34 weist eine Ringnut 35 auf, die über eine Quer- und Längsbohrung 36, 37 mit einer Kammer vor dem Rückschlagventil 38 verbunden ist. Im Gehäuse 30 sind schrägverlaufende Querbohrungen 39 angeordnet, die in die Ringnut 35 führen.

Die Querbohrung 39 und die Ringnut 35 bilden das zweite Drosselventil 12.

In der dargestellten Position besteht eine ungedrosselte Verbindung zwischen den Querbohrungen 39 und dem Saugventil 38. Wird die Stange 34 gemäß der Darstellung nach links verschoben, so befinden sich die Querbohrungen 39 und die Nut 35 nicht mehr in Überdeckung, so daß die Querschnittsfläche, die den Übergangsbereich zwischen der Querbohrung 39 und der Nut 35 markiert, verringert ist. Es tritt eine Drosselfunktion auf. Das zweite Drosselventil 12 ist umgeschaltet.

Der Niederdruckspeicher 7 ist ebenfalls als Einschraubelement ausgebildet. Er besteht aus einem topfartigen Teil 40, der in das nicht dargestellte Pumpengehäuse einschraubbar ist und mit seinem Topfboden an das Gehäuse 30 des Schaltventils 13 anliegt. Das Topfinnere ist über einen Stopfen 41 zur Atmosphäre hin verschlossen. Im Topf selbst ist der Kolben 20 dichtend geführt, wobei die Feder 21 zwischen dem Kolben 20 und dem Topfboden abgestützt ist. Der Bereich zwischen dem Stopfen 41 und dem Kolben 20 bildet den Speicherraum 42 des Niederdruckspeichers 7. Ein erster Anschluß führt zum Auslaßventil (Av) 6. Ein weiterer Anschluß an die Kammer 42 führt zu den Querbohrungen 39.

Die Stange 34 ragt nun durch den Topfboden hindurch in das Topfinnere hinein. Das Ende der Stange 34 befindet sich in einem gewissen Abstand zum Kolben 20.

Wenn, wie schon erläutert, in der Kammer 16 ein höherer Druck erzielt wird als in der Kammer 15, wird die Stange 34 nach links verschoben und nähert sich dem Kolben 20. Es verbleibt trotzdem ein gewisser Abstand. Wird nun die Speicherkammer 42 mit Druckmittel gefüllt, so wird der Kolben 20 gegen die Kraft der Feder 21 gemäß der Darstellung nach rechts verschoben, wobei sich der Kolben 20 der Stange 34 nähert.

Wird der Kolben noch weiter nach rechts verschoben, so wird die Stange 34 mitgenommen, was zur Folge hat, daß das Drosselventil 12 wieder öffnet. Zwischen dem Kolben 20 und der Stange 34 kann eine Feder 43 abgestützt werden, die derart abgestimmt ist, daß der Differenzdruck in den Kammern 16, 15 den Verschiebeweg der Stange 34 gegen die Kraft der Feder 43 und damit die Drosselwirkung der zweiten Drossel 12 bestimmt.

## Patentansprüche

1. Blockiergeschützte hydraulische Bremsanlage mit einem Hauptzylinder (1), einer Radbremse (3), die mit dem Hauptzylinder über eine Bremsleitung (2) verbunden ist, einer Pumpe (8), die aus einem Druckmittelsammler (7) Druckmittel ansaugt und in die Bremsleitung (2) fördert, wobei in der Saugleitung ein Ventil vorgesehen ist, das als schaltbares Drosselventil (12) ausgebildet ist, dadurch **gekennzeichnet**, daß in die Bremsleitung zwischen dem Hauptzylinder (1) und der Einmündung der Druckleitung (10) der Pumpe (8) in die Bremsleitung (2) ein weiteres Drosselventil (11) eingeschaltet ist, wobei beide Drosselventile (11,12) in der nicht geregelten Bremsung in ungedrosselter Position sind, zu Beginn einer Bremsschlupfregelung, wenn der Druck in der Radbremse (3) reduziert ist, in gedrosselter Position sind.

2. Bremsanlage nach Anspruch 1, dadurch **gekennzeichnet**, daß beide Drosselventile (11, 12) hydraulisch umgeschaltet werden.

3. Bremsanlage nach Anspruch 2, dadurch **gekennzeichnet**, daß die Umschaltung auf Grund einer Differenz zwischen dem Hauptzylinderdruck und dem Radbremsdruck erfolgt.

4. Bremsanlage nach Anspruch 1, dadurch **gekennzeichnet**, daß der Druckmittelsammler als Niederdruckspeicher (7) ausgebildet ist, und daß bei gefülltem Niederdruckspeicher zumindest das Drosselventil (12) in der Saugleitung (9) in seine Offenstellung schaltet.

## Claims

1. An anti-lock hydraulic brake system including a master cylinder (1), a wheel brake (3) which is connected to the master cylinder by way of a brake line (2), a pump (8) aspirating pressure fluid from a pressure fluid collecting means (7) and delivering it to the brake line (2), a valve formed as a controllable throttle valve (12) being provided in the suction lines,
**characterized** in that another throttle valve (11) is interposed into the brake line between the master cylinder (1) and the point where the pressure line (10) of the pump (8) terminates into the brake line (2), both throttle valves (11, 12) being in their unrestricted position during a braking operation without anti-lock control, while they are in their restricted position at the onset of a brake slip control operation when the pressure in the wheel brake (3) is reduced.

2. A brake system as claimed in claim 1,
**characterized** in that both throttle valves (11, 12) are changed over hydraulically.

3. A brake system as claimed in claim 2,
**characterized** in that change-over is effected due to a difference between the master cylinder pressure and the wheel brake pressure.

4. A brake system as claimed in claim 1,
**characterized** in that the pressure fluid collecting means is provided as a low-pressure accumulator (7), and in that, when the low-pressure accumulator is filled, at least the throttle valve (12) in the suction line (9) adopts its open position.

## Revendications

1. Système hydraulique de freinage antiblocage, comprenant un maître-cylindre (1), un frein de roue (3), qui est relié au maître-cylindre par l'intermédiaire d'une conduite de frein (2), une pompe (8), qui aspire de l'agent de pression à partir d'un collecteur d'agent de pression (7) et le refoule dans la conduite de frein (2), tandis que, dans la conduite d'aspiration, il est prévu une valve qui est réalisée sous forme d'une valve d'étranglement (12) agencée de façon à pouvoir faire l'objet d'une commutation, caractérisé en ce qu'une autre valve d'étranglement (11) est montée dans la conduite de frein entre le maître-cylindre (1) et l'emplacement auquel la conduite de refoulement (10) de la pompe (8) débouche dans la conduite de frein et en ce que, dans un freinage sans régulation, les deux valves d'étranglement (11, 12) sont en position non étranglée, tandis qu'au début d'une régulation du glissement de freinage, lorsque la pression dans le frein de roue (3) est réduite, elle sont en position étranglée.

2. Système de freinage selon la revendication 1, caractérisé en ce que les deux valves d'étranglement (11, 12) font l'objet d'une commutation par voie hydraulique.

3. Système de freinage selon la revendication 2, caractérisé en ce que la commutation a lieu sur la base d'une différence se présentant entre la pression de maître-cylindre et la pression de frein de roue.

4. Système de freinage selon la revendication 1, caractérisé en ce que le collecteur d'agent de pression est réalisé sous forme d'un accumulateur basse pression (7) et en ce que, lorsque l'accumulateur basse pression est plein, au moins la valve d'étranglement (12) située dans la conduite d'aspiration (29) fait l'objet d'une commutation en position ouverte.
